# EUROPEAN PATENT APPLICATION

(11) **EP 3 315 564 A1**
(43) Date of publication of application: **02.05.2018**
(21) Application number: 17197875.2
(22) Date of filing: 23.10.2017
(51) Int. Cl.: C09D 11/03, C09D 11/037, C09D 11/52

(54) **METAL NANOPARTICLE INK COMPOSITIONS FOR PRINTED ELECTRONIC DEVICE APPLICATIONS**

(30) Priority: 31.10.2016 US 201615339399
(71) Applicant: Xerox Corporation, Norwalk, CT 06856-4505 (US)
(72) Inventor: LIU, Ping, Mississauga, Ontario L5M 3H2 (CA); GOREDEMA, Adela, Ancaster, Ontario L9G 0E1 (CA); ABRAHAM, Biby Esther, Mississauga, Ontario L5M 7E2 (CA); LEE, Jonathan Siu-Chung, Oakville, Ontario L6H 4K4 (CA); VONG, Cuong, Hamilton, Ontario L9C 3H5 (CA); MORIMITSU, Kentaro, Mississauga, Ontario L5M 0H2 (CA); SONG, Guiqin, Milton, Ontario L9T 8A8 (CA); BRETON, Marcel P., Mississauga, Ontario L5K 2S6 (CA); CHRETIEN, Michelle N., Mississauga, Ontario L5N 1J2 (CA)
(74) Representative: Lord, Michael

(57) **Abstract**

An ink composition including a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; and wherein the ink composition has a viscosity of from about 50 to about 200 centipoise at a temperature of about 20 to about 30 °C. A process for preparing the ink composition and for printing the ink composition. A flexographic printing process or gravure printing process including the ink composition.

## Description

### BACKGROUND

Disclosed herein is a high viscosity metal nanoparticle ink composition having a low metal content suitable for printed electronic device applications.

Conductive inks are desired for fabricating conductive patterns for electronic device applications. Metal nanoparticle inks, in particular silver nanoparticle inks, are desired for fabricating conductive patterns for electronic device applications through solution deposition processes.

Xerox® Corporation has invented a nanosilver particle which is stabilized by an organoamine. U. S. Patent 8,765,025, which is hereby incorporated by reference herein in its entirety, describes a metal nanoparticle composition that includes an organic-stabilized metal nanoparticle and a solvent in which the solvent selected has the following Hansen solubility parameters: a dispersion parameter of about 16 MPa^{0.5}, or more, and a sum of a polarity parameter and a hydrogen bonding parameter of about 8.0 MPa^{0.5} or less. U. S. Patent 7,270,694, which is hereby incorporated by reference herein in its entirety, describes a process for preparing stabilized silver nanoparticles comprising reacting a silver compound with a reducing agent comprising a hydrazine compound by incrementally adding the silver compound to a first mixture comprising the reducing agent, a stabilizer comprising an organoamine, and a solvent.

U. S. Patent Application Serial Number 13/866,704, which is hereby incorporated by reference herein in its entirety, describes stabilized metal-containing nanoparticles prepared by a first method comprising reacting a silver compound with a reducing agent comprising a hydrazine compound by incrementally adding the silver compound to a first mixture comprising the reducing agent, a stabilizer comprising an organoamine, and a solvent. U. S. Patent Application Serial Number 14/188,284, which is hereby incorporated by reference herein in its entirety, describes conductive inks having a high silver content for gravure and flexographic printing and methods for producing such conductive inks.

U. S. Patent Application Serial Number 15/061,618, which is hereby incorporated by reference herein in its entirety, describes in the Abstract thereof an ink composition including a metal nanoparticle; at least one aromatic hydrocarbon solvent, wherein the at least one aromatic hydrocarbon solvent is compatible with the metal nanoparticles; at least one aliphatic hydrocarbon solvent, wherein the at least one aliphatic hydrocarbon solvent is compatible with the metal nanoparticles; wherein the ink composition has a metal content of greater than about 45 percent by weight, based upon the total weight of the ink composition; wherein the ink composition has a viscosity of from about 5 to about 30 centipoise at a temperature of about 20 to about 30 °C. A process for preparing the ink composition. A process for printing the ink composition comprising pneumatic aerosol printing.

U. S. Patent Application Serial Number 14/630,899, which is hereby incorporated by reference herein in its entirety, describes in the Abstract thereof a process including selecting a printing system; selecting an ink composition having ink properties that match the printing system; depositing the ink composition onto a substrate to form an image, to form deposited features, or a combination thereof; optionally, heating the deposited features to form conductive features on the substrate; and performing a post-printing treatment after depositing the ink composition.

U. S. Patent Application Serial Number 14/594,746, which is hereby incorporated by reference herein in its entirety, describes in the Abstract thereof a nanosilver ink composition including silver nanoparticles; polystyrene; and an ink vehicle. A process for preparing a nanosilver ink composition comprising combining silver nanoparticles; polystyrene; and an ink vehicle. A process for forming conductive features on a substrate using flexographic and gravure printing processes comprising providing a nanosilver ink composition comprising silver nanoparticles; polystyrene; and an ink vehicle; depositing the nanosilver ink composition onto a substrate to form deposited features; and heating the deposited features on the substrate to form conductive features on the substrate.

Solution processable conducting materials including silver nanoparticle inks play an important role in electronic device integrations. Conductive inks that can be easily dispersed in suitable solvents and used to fabricate various conducting features in electronic devices such as electrodes and electrical interconnectors by low-cost solution deposition and patterning techniques including spin coating, dip coating, aerosol printing, and ink jet printing technologies are particularly desired.

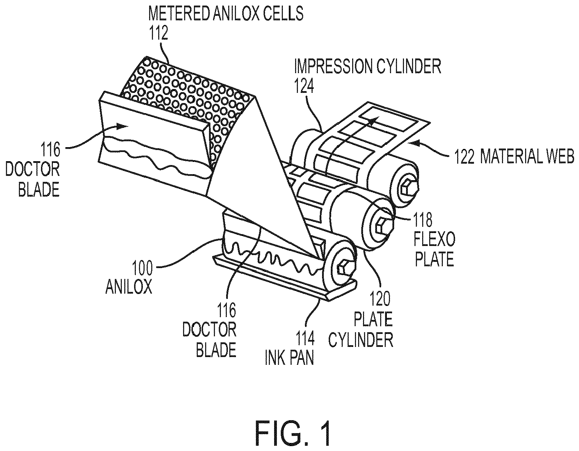

As printed electronics matures and moves to higher volume production, it is desirable to have inks that can be used in offset printing technologies such as flexography and gravure. Offset printing technologies provide established printing processes and equipment. Figure 1 shows a schematic diagram of a flexographic printing process. Flexographic printing processes generally comprise the following steps: a) anilox roller 100 having metered anilox cells 112 picks up ink from the ink pan 114; b) doctor blade 116 scrapes off excess ink; c) ink is then deposited on to the flexo-plate 118; d) flexo plate 118 and plate cylinder 120 transfer features onto the substrate (material web) 122 shown exiting impression cylinder 124.

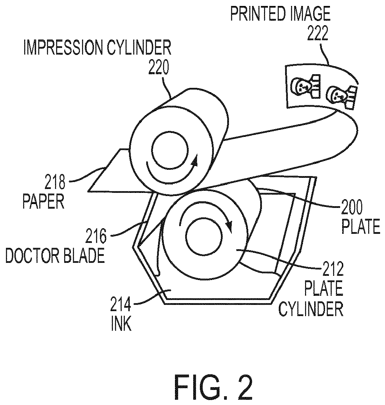

A gravure printing process is very similar to flexography except that it does not have an anilox roller and the image is engraved onto a metal cylinder. This makes gravure more expensive than flexo in high volume printing. One of the main advantages of gravure over flexo is the ability to consistently make high quality prints. Figure 2 shows a schematic diagram of a gravure printing process. Gravure processes generally comprise the following steps: a) plate 200 comprising plate cylinder 212 picks up ink 214 from the ink pan; b) doctor blade 216 scrapes off excess ink; c) ink is then transferred from the plate cylinder 212 to the substrate (paper) 218 shown exiting impression cylinder 220 having printed image 222 printed thereon.

Gravure and flexographic processes provide a potentially efficient way to manufacture a number of conductive components at a lower cost than that of other printing applications. However, such processes require different processing parameters than conventional graphics printing, particularly for electronics applications.

The gravure printing process is one of the simplest printing technologies, involving a process where the ink is directly deposited onto the substrate. For gravure printing, higher viscosity inks are desired compared to other ink printing technologies such as inkjet printing. Previously, a method to increase the viscosity of silver nanoparticle inks included increasing silver nanoparticle content and (or) adding polymeric materials. While this approach can be suitable for some applications, one disadvantage of increasing silver nanoparticle loading is the high cost of the conductive ink, thus making it less compatible for low cost printed electronics manufacturing applications. Further, for some gravure printing processes, the required viscosity is quite high (for example, greater than 100 centipoise at about 25 °C). It can be difficult or impossible to achieve such a high viscosity by increasing the concentration of silver nanoparticles in common organic solvents. A disadvantage of adding polymeric materials to increase ink viscosity is that there can be a trade-off with the ink conductivity performance. Therefore there is a need to develop high viscosity conductive inks with low silver content (e.g. less than about 20%) for low cost electronic device applications.

While currently available ink compositions and processes are suitable for their intended purposes, there remains a need for high viscosity conductive ink compositions having reduced metal content. There further remains a need for high viscosity conductive ink compositions having low silver content (for example, up to or less than about 20 weight percent) for low cost electronic device applications. There further remains a need for such inks that are particularly suitable for gravure type printing applications.

The appropriate components and process aspects of each of the foregoing U. S. Patents and Patent Publications may be selected for the present disclosure in embodiments thereof. Further, throughout this application, various publications, patents, and published patent applications are referred to by an identifying citation. The disclosures of the publications, patents, and published patent applications referenced in this application are hereby incorporated by reference into the present disclosure to more fully describe the state of the art to which this invention pertains.

### SUMMARY

Described is an ink composition comprising a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; wherein the ink composition has a viscosity of from about 50 to about 200 centipoise at a temperature of about 20 to about 30 °C.

Also described is a process for preparing an ink composition comprising combining a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; wherein the ink composition has a viscosity of from about 50 to about 200 centipoise at a temperature of about 20 to about 30 °C.

Also described is a process comprising providing a composition comprising a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; wherein the ink composition has a viscosity of from about 50 to about 200 centipoise at a temperature of about 20 to about 30 °C; depositing the ink composition onto a substrate to form deposited features; and optionally, heating the deposited features on the substrate to form conductive features on the substrate.

### BRIEF DESCRIPTION OF THE DRAWINGS

Figure 1 is a schematic diagram of a flexographic printing process.
Figure 2 is a schematic diagram of a gravure printing process.

### DETAILED DESCRIPTION

An ink composition is provided comprising a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; and wherein the ink composition has a viscosity of from about 50 to about 200 centipoise at a temperature of about 20 to about 30 °C. Processes for preparing the ink composition and for printing the ink composition are also provided. In embodiments, a flexographic printing process or gravure printing process including the ink composition is provided.

### Metal Nanoparticles.

Any suitable or desired metal nanoparticle can be selected for embodiments herein. In embodiments, the metal nanoparticle can comprise a metal oxide, in embodiments a silver oxide. In embodiments, the ink composition herein comprises metal nanoparticles, in certain embodiments, silver nanoparticles. The metal nanoparticles may have any shape or geometry. In embodiments, the metal nanoparticles have a spherical shape. The metal nanoparticles can have a diameter in the submicron range. In embodiments, the metal nanoparticles have a volume average particle size of from about 0.5 to about 100 nanometers (nm), or from about 1.0 to about 50 nm, or from about 1.0 to about 20 nm. In embodiments, metal nanoparticles herein comprise nanoparticles of a size such that they can be sintered or annealed at low temperatures, such as, at a temperature of less than about 200 °C, or less than about 100 °C. In specific embodiments, the metal nanoparticles have a volume average particle size of from about 0.5 to about 50 nm, or from about 1 to about 20 nm, or from about 2.0 to about 10 nm. In other specific embodiments, the ratio of the volume average particle size to the number mean length diameter of the metal nanoparticles is less than about 1.3, or less than about 1.2, or less than about 1.1.

The characteristics of the metal nanoparticles may be determined by any suitable technique and apparatus. Volume average particle diameter may be measured by means of a measuring instrument such as a dynamic light scattering particle analyzer, operated in accordance with the manufacturer's instructions. Volume average particle diameter may be derived, for example, by means of a measuring instrument such as a Malvern Instruments Zetasizer® Nano S, operated in accordance with the manufacturer's instructions.

In embodiments, the metal nanoparticle is selected from the group consisting of silver, cobalt, copper, nickel, gold, palladium, and combinations thereof. In embodiments, the metal nanoparticle is a silver nanoparticle.

The silver nanoparticles may be elemental silver, a silver alloy, or a combination thereof. In embodiments, the silver nanoparticles may be a base material coated or plated with pure silver, a silver alloy, or a silver compound. For example, the base material may be copper flakes with silver plating. The silver alloy may be formed from at least one metal selected from Au, Cu, Ni, Co, Pd, Pt, Ti, V, Mn, Fe, Cr, Zr, Nb, Mo, W, Ru, Cd, Ta, Re, Os, Ir, Al, Ga, Ge, In, Sn, Sb, Pb, Bi, Si, As, Hg, Sm, Eu, Th, Mg, Ca, Sr, and Ba, although not limited.

In embodiments, the silver compound may include either or both of (i) one or more other metals and (ii) one or more non-metals. Suitable other metals include, for example, Al, Au, Pt, Pd, Cu, Co, Cr, In, and Ni, particularly the transition metals, for example, Au, Pt, Pd, Cu, Cr, Ni, and mixtures thereof. Exemplary metal composites are Au-Ag, Ag-Cu, Au-Ag-Cu, and Au-Ag-Pd. Suitable non-metals in the metal composite include, for example, Si, C, and Ge. In certain embodiments the silver nanoparticles are composed of elemental silver. In embodiments, the silver particles can be selected from those described in U. S. Patent Application Serial Number 14/188,284, which is hereby incorporated by reference herein in its entirety.

In embodiments, the metal nanoparticles may comprise solely elemental silver or may be a silver composite, including composites with other metals. Such silver composites may include either or both of (i) one or more other metals and (ii) one or more non-metals. Suitable other metals include, for example Al, Au, Pt, Pd, Cu, Co, Cr, In and Ni, such as, the transition metals, for example, Au, Pt, Pd, Cu, Cr, Ni and mixtures thereof. Exemplary metal composites are Au-Ag, Ag-Cu, Au-Ag-Cu and Au-Ag-Pd. Suitable non-metals in the silver composite include, for example, Si, C and Ge. The various non-silver components of the silver composite may be present in an amount ranging, for example, from about 0.01% to about 99.9% by weight, from about 10% to about 90% by weight. In embodiments, the silver composite is a metal alloy composed of silver and one, two or more other metals, with silver comprising, for example, at least about 20% of the nanoparticle by weight, greater than about 50% of the nanoparticle by weight. Unless otherwise noted, the weight percentages recited herein for the components of the silver-containing nanoparticles do not include a stabilizer.

Silver nanoparticles composed of a silver composite can be made, for example, by using a mixture of: (i) a silver compound (or compounds, such as, a silver (I) ion-containing compound); and (ii) another metal salt (or salts) or another non-metal (or non-metals) during a reduction step.

The silver nanoparticles can be prepared as described in U. S. Patent Application Publication 2013/0029034, which is hereby incorporated by reference herein in its entirety. In embodiments, a process for producing silver nanoparticles includes receiving a first mixture comprising a silver salt, an organoamine, a first solvent, and a second solvent; and reacting the first mixture with a reducing agent solution to form organoamine-stabilized silver nanoparticles. The polarity index of the first solvent is less than 3.0, and the polarity index of the second solvent is higher than 3.0. The nanoparticles are more dispersible or soluble in the first solvent. For further detail, see U. S. Patent Application Publication 2013/0029034.

The silver nanoparticles can be stabilized metal-containing nanoparticles prepared as described in U. S. Patent 7,270,694, which is hereby incorporated by reference herein in its entirety. In embodiments, the silver nanoparticles can be prepared by a process comprising reacting a silver compound with a reducing agent comprising a hydrazine compound in the presence of a thermally removable stabilizer in a reaction mixture comprising the silver compound, the reducing agent, the stabilizer, and an optional solvent, to form a plurality of silver-containing nanoparticles with molecules of the stabilizer on the surface of the silver-containing nanoparticles. For further detail, see U. S. Patent 7,270,694.

In embodiments, the metal nanoparticle is a silver nanoparticle having a stabilizer associated with a surface of the silver nanoparticle. The silver nanoparticle can, in embodiments, be selected from the group consisting of silver, silver-copper composite, silver-gold-copper composite, silver-gold-palladium composite, and combinations thereof. In embodiments, the stabilizer is an organoamine stabilizer. In embodiments, the organoamine stabilizer can be selected from the group consisting of nonylamine, decylamine, hexadecylamine, undecylamine, dodecylamine, tridecylamine, tetradecylamine, and combinations thereof. For further detail, see U. S. Patent 8,765,025, which is hereby incorporated by reference herein in its entirety.

The metal nanoparticles can be present in the ink composition in any suitable or desired amount. In embodiments, the metal nanoparticles are present in the ink compositions in an amount of less than about 25 percent by weight, or less than about 20 percent by weight, or up to about 20 percent by weight, based on the total weight of the ink composition. In embodiments, the metal nanoparticles are present in the ink compositions in an amount of from about 10 to about 25 percent by weight, or from about 15 to about 25 percent by weight, or from about 10 to about 20 percent by weight, or from about 10 to less than about 25 percent by weight, or from about 10 to less than about 20 percent by weight, or from about 15 to less than about 20 percent by weight, based on the total weight of the ink composition.

In embodiments, the metal nanoparticle is a silver nanoparticle present in the ink composition so as to provide the ink composition with a silver metal content of less than about 25 percent by weight, or about 20 percent by weight, or less than about 20 percent by weight, based on the total weight of the ink composition. In embodiments, the metal nanoparticle is a silver nanoparticle and the silver nanoparticle is present in an amount of from about 10 to about 25 percent by weight, or from about 10 to less than about 25 percent by weight, based upon the total weight of the ink composition.

### Viscous Heat Decomposable Liquid.

In embodiments, a viscous heat decomposable liquid is included in the ink compositions herein. As used herein, "viscous heat decomposable liquid" is a compound having the property of imparting to the ink composition a desired viscosity, which is stable at room temperature, such as from about 20 °C to about 30°C, or about 25 °C, and which decomposes or evaporates at a temperature that is higher than room temperature, in embodiments, which decomposes or evaporates at a sintering temperature of the metal nanoparticle. The viscous heat decomposable liquid thus is stable at room temperature and decomposes or evaporates at a higher temperature, such as a sintering temperature of the metal nanoparticle. Thus, when the printed ink composition is treated, such as heated (sintered) to a temperature sufficient to anneal the metal nanoparticle, the viscous heat decomposable liquid decomposes or evaporates completely or essentially completely. In embodiments, the "viscous heat decomposable liquid" has a viscosity of from about 1,000 to about 6,000 centipoise at a temperature of about 20 to about 30 °C, or from about 1,500 to 5,000 centipoise at a temperature of about 20 to about 30 °C. In embodiments, the viscous heat decomposable liquid is an organoammonium carbamate having a viscosity of from about 1,000 to about 6,000 centipoise at a temperature of about 20 to about 30 °C, or from about 1,500 to 5,000 centipoise at a temperature of about 20 to about 30 °C.

Any suitable or desired viscous heat decomposable liquid can be selected for embodiments herein, provided that the viscous heat decomposable liquid has the dual properties of imparting a desired viscosity to the ink composition and decomposing upon treatment, in embodiments, evaporating when heated. Thus, the selected viscous heat decomposable liquid increases the viscosity of the ink composition to a desired viscosity, but once treated (such as heated), evaporates such that it does not interfere with the formed film, such as does not protrude from the film (because it has decomposed or evaporated) and thus, the selected viscous heat decomposable liquid does not linger, and thus does not interfere with or reduce the conductivity of the printed traces.

In embodiments, viscous heat decomposable liquids, for example, decomposable organoammonium carbamates, are provided as sole solvents or as part of a dual or multi-solvent system for metal inks suitable for use in a gravure printing application. The organoammonium carbamates enable the ink composition to have a high viscosity without requiring a high metal content and, on heating, they decompose to enable high conductivity traces with low solids loading of silver. The viscosity of the solvent can be adjusted by selection of the viscous heat decomposable liquid, in embodiments, by selection of substituents on an organoammonium carbamate. Benefits of the present embodiments include the ability to support gravure printing ink applications, reduced cost over currently available ink compositions, and improved conductivity of printed ink traces.

In embodiments, conductive metal nanoparticle inks herein having a high viscosity of from about 50 centipoise (cps) or to about 200 cps at a temperature of from about 20 to about 30 °C with a low metal nanoparticle concentration, in embodiments, a metal nanoparticle content of less than about 30 percent by weight based on the total weight of the ink composition, less than about 25 percent by weight, up to or less than about 20 percent by weight, is provided which meets the requirements for low cost printed electronic applications. In other embodiments, conductive metal nanoparticle inks herein having a high viscosity of up to or over about 120 centipoise (cps) or up to or over about 110 cps or up to or over about 100 cps at a temperature of from about 20 to about 30 °C with a low metal nanoparticle concentration, in embodiments, a metal nanoparticle content of less than about 30 percent by weight based on the total weight of the ink composition, less than about 25 percent by weight, up to or less than about 20 percent by weight, is provided which meets the requirements for low cost printed electronic applications.

In embodiments, the viscous heat decomposable liquid is selected from the group consisting of organoammonium carbamates, and combinations thereof.

In embodiments, the viscous heat decomposable liquid is an organoammonium carbamate. Any suitable or desired organoammonium carbamate can be selected for embodiments herein. In embodiments, an organoammonium carbamate is selected having the structure 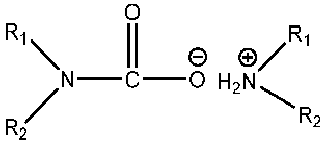 wherein R₁ and R₂ are each independently selected from the group consisting of hydrogen, and substituted or unsubstituted aliphatic alkyl groups having from about 1 to about 20 carbon atoms.

In embodiments, the viscous heat decomposable liquid is an organoammonium carbamate selected from the group consisting of pentylammonium pentylcarbamate, n-pentylammonium n-pentylcarbamate; n-butylammonium n-butylcarbamate, n-hexylammonium n-hexylcarbamate, 2-ethylhexylammonium 2-ethylhexylcarbamate, and combinations thereof.

The organoammonium carbamate can be prepared by any suitable or desired process. In embodiments, the organoammonium carbamate is prepared by bubbling carbon dioxide through a primary amine either in the presence of a solvent or with no solvent.

In embodiments, a reaction scheme is as follows: 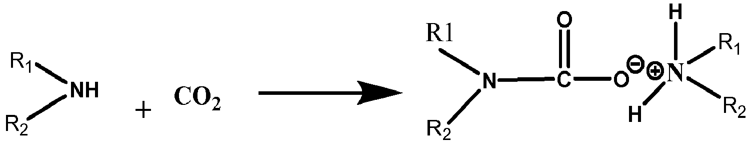 wherein R₁ and R₂ are each independently selected from the group consisting of hydrogen, and substituted or unsubstituted aliphatic alkyl groups having from about 1 to about 20 carbon atoms.

The organoammonium carbamate can also be prepared from the corresponding amine and carbon dioxide as described in J. Am. Chem. Soc. 70 (1948) 3865 - 3866, J. Am. Chem. Soc. 73 (1951) 1829 - 1831, J. Am. Chem. Soc. 123 (2001) 10393 - 10394, J. Am. Chem. Soc. 123 (2001), each of which are incorporated by reference herein in their entireties. See also, Helvetica Chem. Acta. 81 (1998) 219-230, which is hereby incorporated by reference herein in its entirety.

The viscous heat decomposable liquid can be present in the ink composition in any suitable or desired amount. The viscous heat decomposable liquid is selected in an amount sufficient to impart a desired viscosity to the ink composition without the need for high metal loading or other filler or viscosity enhancing compounds. In embodiments, the viscous heat decomposable liquid is present in an amount of from about 30 to about 75 weight percent, or from about 30 to about 70 weight percent, or from about 40 to about 70 weight percent, or from about 40 to about 65 weight percent, or from about 45 to about 65 weight percent, or from about 45 to about 60 weight percent, based on the total weight of the ink composition.

### Solvents.

The ink compositions may also contain a solvent or mixture of solvents. Such solvents may be included, in embodiments, in addition to the viscous heat decomposable liquid (which may be considered a solvent, in embodiments). In embodiments, the solvent is selected from the group consisting of an aromatic hydrocarbon solvent, an aliphatic hydrocarbon solvent, and combinations thereof.

Any suitable or desired solvent (sometimes called an ink vehicle) can be selected. In embodiments, two or more solvents can be used. In embodiments, the solvent can be a nonpolar organic solvent selected from the group consisting of hydrocarbons such as alkanes, alkenes, alcohols having from about 7 to about 18 carbon atoms such as undecane, dodecane, tridecane, tetradecane, hexadecane, 1-undecanol, 2-undecanol, 3-undecanol, 4-undecanol, 5-undecanol, 6-undecanol, 1-dodecanol, 2-dodecanol, 3-dedecanol, 4-dedecanol, 5-dodecanol, 6-dodecanol, 1-tridecanol, 2-tridecanol, 3-tridecanol, 4-tridecanol, 5-tridecanol, 6-tridecanol, 7-tridecanol, 1-tetradecanol, 2-tetradecanol, 3-tetradecanol, 4-tetradecanol, 5-tetradecanol, 6-tetradecanol, 7-tetradecanol, and the like; alcohols such as terpineol (a-terpineol), β-terpineol, geraniol, cineol, cedral, linalool, 4-terpineol, 3,7-dimethylocta-2,6-dien-1ol, 2-(2-propyl)-5-methyl-cyclohexane-1-ol; isoparaffinic hydrocarbons such as isodecane, isododecane; commercially available mixtures of isoparaffins such as Isopar™ E, Isopar™ G, Isopar™ H, Isopar™ L, Isopar™ V, Isopar™ G, manufactured by Exxon Chemical Company; Shellsol® manufactured by Shell Chemical Company; Soltrol® manufactured by Chevron Phillips Chemical Company; Begasol® manufactured by Mobil Petroleum Co., Inc.; IP Solvent 2835 manufactured by Idemitsu Petrochemical CO., Ltd; naphthenic oils; aromatic solvents such as benzene, nitrobenzene, toluene, ortho-, meta-, and para-xylene, and mixtures thereof; 1,3,5-trimethylbenzene (mesitylene); 1,2-, 1,3-, and 1,4-dichlorobenzene and mixtures thereof, trichlorobenzene; cyanobenzene; phenylcyclohexane and tetralin; aliphatic solvents such as isooctane, nonane, decane, dodecane; cyclic aliphatic solvents such as bicyclohexyl and decalin; and mixtures and combinations thereof. In embodiments, the ink vehicle comprises a member of the group consisting of decalin, bicyclohexyl, xylene, hexadecane, toluene, tetradecane, methyl naphthalene, tetrahydronaphthalene, tetramethyl benzene, ethyl benzene, and mixtures and combinations thereof. In embodiments, the ink vehicle is decalin. In other embodiments, the ink vehicle is a mixture of decalin and bicyclohexyl.

In certain embodiments, the optional solvent is present and is selected from the group consisting of an aromatic hydrocarbon solvent, an aliphatic hydrocarbon solvent, and combinations thereof; wherein, in embodiments, the at least one aromatic hydrocarbon solvent is selected from the group consisting of phenylcyclohexane, toluene, mesitylene, m-xylene, ethylbenzene, and combinations thereof; wherein, in embodiments, the at least one aliphatic hydrocarbon solvent is selected from the group consisting of ethylcyclohexane, methylcyclohexane, terpineol, bicyclohexyl, decahydronaphthalene, cyclohexane, Isopar™ G, and combinations thereof.

In certain embodiments, wherein the viscous heat decomposable liquid is an organoammonium carbamate; and the optional solvent is present and is an isoparaffin fluid, in embodiments, Isopar™ G. ISOPAR® are high purity isoparaffin fluids with narrow boiling ranges manufactured by ExxonMobil Chemical wherein differing grades are denoted as E, G, L, M & V.

In certain embodiments, the viscous heat decomposable liquid is an organoammonium carbamate; and the optional solvent, if present, is bicyclohexyl or Isopar™ G.

The solvent can be present in the ink composition in any suitable or desired amount. In embodiments, the ink vehicle is present in an amount of from about 5 to about 50 weight percent, or from about 10 to about 40 weight percent, or from about 10 to about 30 weight percent, based on the total weight of the nanosilver ink composition.

### Preparing the Ink Composition.

The ink compositions can be prepared by any suitable process, such as by simple mixing of the ingredients. One process entails mixing all of the ink ingredients together and filtering the mixture to obtain an ink. Inks can be prepared by mixing the ingredients, heating if desired, and filtering, followed by adding any desired additional additives to the mixture and mixing at room temperature with moderate shaking until a homogeneous mixture is obtained, in embodiments from about 5 to about 10 minutes, up to about 24 hours. Alternatively, the optional ink additives can be mixed with the other ink ingredients during the ink preparation process, which takes place according to any desired procedure, such as by mixing all the ingredients, heating if desired, and filtering.

In embodiments, a process for preparing an ink composition comprises combining a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; wherein the ink composition has a viscosity of from about 50 to about 200 centipoise at a temperature of about 20 to about 30 °C.

Shear index can be measured by any suitable or desired method as known in the art, such as with an Ares G2 Rheometer from TA Instruments using a 50 millimeter cone, 0.053 microns gap, using a rate sweep run from 40 to 400 s⁻¹ and 400 to 40 s⁻¹ at 25 °C.

In embodiments, the ink compositions herein have a shear index of below 1.10. In embodiments, the ink compositions have a shear index of from about 0.9 to below 1.10.

Viscosity can be measured by any suitable or desired method as known in the art, such as with an Ares G2 Rheometer from TA Instruments. Viscosity data can be obtained, for example, at 25°C on an Ares G2 Rheometer from TA Instruments using a 50 millimeter cone, 0.053 microns gap.

In embodiments, the ink composition is a high-viscosity composition. In embodiments, the ink composition has a viscosity of from about 50 to about 200 centipoise at a temperature of about 20 to about 30 °C. In embodiments, the ink composition disclosed herein has a viscosity of from about 50 to about 200, or of from about 60 to about 150, or from about 70 to about 120 centipoise at a temperature of about 25 °C. In embodiments, the ink composition disclosed herein has a viscosity of from about 120 to about 200, or of from about 150 to about 200 centipoise at a temperature of about 25 °C. In certain embodiments, the ink has a viscosity of from about 50 to about 200 centipoise at a temperature in the range of from about 20 to about 30 °C and shear rate of from about 40 to about 400 s⁻¹.

The metal nanoparticle ink compositions can be employed in any suitable or desired printing process. A process herein comprises providing the present ink composition; depositing the ink composition onto a substrate to form deposited features, an ink image, or a combination thereof. In embodiments, the process further comprises heating the deposited features on the substrate to form conductive features on the substrate.

In embodiments, a process herein comprises providing a composition comprising a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; wherein the ink composition has a viscosity of from about 50 to about 200 centipoise at a temperature of about 20 to about 30 °C; depositing the ink composition onto a substrate to form deposited features; and optionally, heating the deposited features on the substrate to form conductive features on the substrate. In embodiments, the printing process can comprise a flexographic printing process or a gravure printing process. In embodiments, the process further comprises heating the deposited features on the substrate to form conductive features on the substrate.

In embodiments, the ink compositions are used in a flexographic printing process. For example, in embodiments, a flexographic printing process herein comprises using the present ink compositions in a flexographic printing process comprising the following steps: a) using an anilox roller having metered anilox cells to pick up ink from an ink supply such as an ink pan; b) optionally, using a doctor blade to scrape off excess ink; c) depositing ink on to a flexographic plate; d) transferring the deposited ink from the flexographic plate onto a substrate, such as a material web.

In further embodiments, the ink compositions are used in a gravure printing process. For example, in embodiments, a gravure printing process herein comprises using the present ink compositions in a gravure printing process comprising the following steps: a) using a plate to pick up ink from an ink supply such as an ink pan; b) optionally, scraping off excess ink with a doctor blade; c) transferring the ink from a plate cylinder to a substrate (such as paper); exiting the substrate from an impression cylinder having a printed image printed thereon.

In embodiments, a process for forming conductive features on a substrate herein comprises providing the present ink composition; depositing the ink composition onto a substrate to form deposited features; and heating the deposited features on the substrate to form conductive features on the substrate. In embodiments, the process for forming conductive features on a substrate comprises a flexographic printing process or a gravure printing process.

The fabrication of conductive features, such as an electrically conductive element, from the ink composition can be carried out by depositing the composition on a substrate using any suitable deposition technique including flexographic and gravure printing processes at any suitable time prior to or subsequent to the formation of other optional layer or layers on the substrate. Thus deposition of the ink composition on the substrate can occur either on a substrate or on a substrate already containing layered material, for example, a semiconductor layer and/or an insulating layer.

The substrate upon which the metal features are deposited may be any suitable substrate including silicon, glass plate, plastic film, sheet, fabric, or paper. For structurally flexible devices, plastic substrates such as polyester, polycarbonate, polyimide sheets, and the like, may be used. The thickness of the substrate can be any suitable thickness such as about 10 micrometers to over 10 millimeters with an exemplary thickness being from about 50 micrometers to about 2 millimeters, especially for a flexible plastic substrate, and from about 0.4 to about 10 millimeters for a rigid substrate such as glass or silicon.

Heating the deposited ink composition can be to any suitable or desired temperature, such as to from about 70 °C to about 200 °C, or any temperature sufficient to induce the metal nanoparticles to "anneal" and thus form an electrically conductive layer which is suitable for use as an electrically conductive element in electronic devices. The heating temperature is one that does not cause adverse changes in the properties of previously deposited layers or the substrate. In embodiments, use of low heating temperatures allows use of low cost plastic substrates which have an annealing temperature of below 200 °C. As described herein, the heating temperature is also a temperature at which the viscous heat decomposable liquid decomposes or evaporates.

The heating can be for any suitable or desire time, such as from about 0.01 second to about 10 hours. The heating can be performed in air, in an inert atmosphere, for example under nitrogen or argon, or in a reducing atmosphere, for example, under nitrogen containing from about 1 to about 20 percent by volume hydrogen. The heating can also be performed under normal atmospheric pressure or at a reduced pressure of, for example, about 1000 mbars to about 0.01 mbars.

Heating encompasses any technique that can impart sufficient energy to the heated material or substrate to 1) evaporation of the heat decomposable liquid, and/or (2) remove any optional stabilizer from the metal nanoparticles, and (3) anneal the metal nanoparticles. Examples of heating techniques include thermal heating (for example, at hot plate, an oven, and a burner), infra-red ("IR") radiation, laser beam, flash light, microwave radiation, or ultraviolet ("UV") radiation, or a combination thereof.

In embodiments, after heating, the resulting electrically conductive line has a thickness ranging from about 0.025 to about 10 micrometers, or from about 0.03 to about 5 micrometers. In certain embodiments, after heating, the resulting electrically conductive line has a thickness of from about 0.04 to about 2.5 micrometers. In embodiments, the ink composition provides a printed image having a bulk conductivity after heating of from about 75,000 to about 250,000 S/cm at a printed image line thickness of from about 0.05 to about 1 micrometer.

In, embodiments, the ink composition herein has a bulk conductivity that is more than about 50,000 S/cm. The conductivity of the resulting metal element produced by heating the deposited nanosilver ink composition is, for example, more than about 100 Siemens/centimeter (S/cm), more than about 1,000 S/cm, more than about 2,000 S/cm, more than about 5,000 S/cm, more than about 10,000 S/cm, or more than about 50,000 S/cm.

The resulting elements can be used for any suitable or desired application, such as for electrodes, conductive pads, interconnects, conductive lines, conductive tracks, and the like, in electronic devices such as thin film transistors, organic light emitting diodes, RFID tags, photovoltaic, displays, printed antenna, and other electronic devise which required conductive elements or components.

### EXAMPLES

The following Examples are being submitted to further define various species of the present disclosure. These Examples are intended to be illustrative only and are not intended to limit the scope of the present disclosure. Also, parts and percentages are by weight unless otherwise indicated.

### Examples 1-5

Comparative Ink Examples. Viscosity results of organoamine stabilized silver nanoparticles inks with different silver nanoparticle loading in bicyclohexyl (BCH).

A series of silver nanoparticle inks having different silver nanoparticle concentrations up to 80 weight percent in BCH were prepared by adding appropriate amount of the solvent (BCH) to the silver nanoparticles. The resulting mixtures were gently shaken for about 2 hours and then rolled for 24 hours. The final silver nanoparticle inks were obtained after filtration with a syringe filter (1.0 µm). The results of viscosity for all the inks prepared are shown in Table 1. As we can see in Table 1, at low solid loading of 20 weight percent, the ink viscosity at 25 °C was only 4.03 cps; at high solid loading of 80 weight percent, the ink viscosity was increased to 65.7 cps, but still far from 100 cps.

**Table 1**

| Solid Loading Weight Percent | Example Number | Shear Viscosity mPa-s |
|---|---|---|
| 20.0 | 1 | 4.03 |
| 40.0 | 2 | 5.37 |
| 60.0 | 3 | 8.80 |
| 70.0 | 4 | 16.05 |
| 80.0 | 5 | 65.70 |

### Example 6

### Synthesis of 2-ethylhexylammonim 2-ethylhexycarbamate (EHA-EHC).

Into a 2 Liter beaker was mixed 2-ethylhexylamine (500 milliliters) and hexane (500 milliliters). The resulting solution was charged to a 2 Liter Buchi reactor (set temp = 24.5 °C) under reduced pressure. Carbon dioxide gas was bubbled at about 50 pounds per square inch (psi) during which the temperature increased (exothermic reaction). Carbon dioxide was slowly added to maintain a reaction temperature of about 35 °C. Pressure inside the reactor went up to about 300 kPa. Reaction was considered finished when there was no longer any temperature increase during carbon dioxide addition. Reaction was also monitored by ¹H NMR. Total amount of carbon dioxide used was about 70 grams. Product was discharged from reactor and hexane was removed by rotary evaporator at 25 °C and vacuum pump at room temperature overnight with stirring to obtain viscous clear oil which had a viscosity of 3183 cps.

The ink compositions herein thus provide advantages including, but not limited to, enablement of conductive silver inks having different viscosities obtained by adjusting the amount of organoammonium carbamate in the ink composition; enablement of the formation of highly conductive films or patterns achieved after sintering the printed ink, achieved by the heat-decomposable trait of the organoammonium carbamate which evaporates during the annealing process performed after ink deposition on the surface of the desired substrate; enablement of stable silver nanoparticles inks containing selected organoammonium carbamate based compounds which inks are particularly suitable for low cost gravure printing applications.

### Example 7

Properties of silver ink with 20 weight percent silver nanoparticle loading in a mixed solvent of 2-ethylhexylammonium 2-ethylhexylcarbamate (EHA-EHC) and bicyclohexyl (BCH).

The structure of EHA-EHC (2-ethylhexylammonium 2-ethylhexylcarbamate) is shown below:

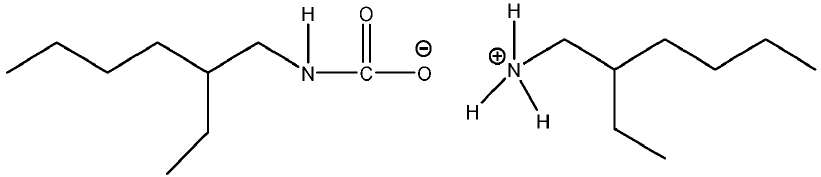

45 grams of ink Example 7 was prepared by adding 11.25 grams of Example 5 concentrated silver ink in bicyclohexyl (80 wt.%) to a mixed solvent of 26.28 grams of 2-ethylhexylammonium 2-ethylhexylcarbamate (EHA-EHC) of Example 6 and 7.47 grams of bicyclohexyl (BCH). The mixture was stirred with a magnetic stirring bar in a container for 2 days to give a uniform dark brownish viscous silver nanoparticle ink.

### Example 8

Properties of silver ink with 20 weight percent silver nanoparticle loading in a mixed solvent of 2-ethylhexylammonium 2-ethylhexylcarbamate (EHA-EHC) and Isopar™® G (commercially available mixtures of isoparaffins available from ExxonMobil Chemical).

10 grams of ink Example 8 was prepared by adding 2.5 grams of concentrated silver ink in Isopar™ G (80 wt.%) to a mixed solvent of 6.16 grams of 2-ethylhexylammonium 2-ethylhexylcarbamate (EHA-EHC) of Example 6 and 1.34 grams of Isopar™ G. The mixture was stirred with a magnetic stirring bar in a container for 2 days to give a uniform dark brownish viscous silver nanoparticle ink. Both ink properties including ink viscosity, surface tension and electronic performance were evaluated.

All the ink viscosity results were measured by RFS 3 Rheometer from TA Instruments (Previously Rheometric Scientific) in a shear rate range of 1- 400 S⁻¹ and the average viscosity was taken from the shear rate in the range of 40-400 S⁻¹ from high to low. Ink conductivity property was evaluated by depositing a film on a glass substrate by spin-coating at 2000 rpm. The coated films were annealed at 140 °C in an oven for about 10 minutes and the sheet resistance and film conductivity were measured with a Keithley® 237 4-probe voltage source measuring unit. The surface tension of both inks were also measured with a Kruss K-100 Tensiometer.

The results of viscosity and electronic properties for ink Example 7 and ink Example 8 are summarized in Table 2.

**Table 2**

| | **Ink Example 7** | **Ink Example 8** |
|---|---|---|
| **Component** | **Wt%** | **Wt%** |
| Silver nanoparticle | 20 | 20 |
| 2-ethylhexylammonim 2-ethylhexycarbamate | 58.4 | 61.6 |
| bicyclohexyl | 21.6 | |
| Isopar™® | | 18.4 |
| Total | 100 | 100 |

| **Ink Properties** | | |
|---|---|---|
| Surface Tension (mN/m) | 28.7 | 25.3 |
| Viscosity (cps) | 111.56 | 110.35 |
| Film Thickness (nm) | 328 | 313 |
| Sheet Resistance (ohms/sq) | 0.14 | 0.23 |
| Film Conductivity (S/cm) | 2.2 x 10⁵ | 1.3 x 10⁵ |

As shown in Table 2, at a low 20 weight percent silver nanoparticle loading, ink viscosity was dramatically increased from about 4 (Ink Example 1) to over 100 cps. Both the ink of Example 7 and Example 8 showed excellent electronic properties with low sheet resistance (<0.25 ohms/sq) and high conductivity (>1.0 x 10⁵ S/cm). Ink surface tension can be adjusted with different solvent mixtures to fit different substrate surface properties for electronic device applications.

Thus, in embodiments herein, high viscosity conductive organoamine stabilized silver nanoparticle inks are provided including organoammonium carbamate based compounds as one of the solvents in the ink, for example, 2-ethylhexylammonium 2-ethylhexylcarbamate (EHA-EHC). Advantages of the disclosure include:
1) High ink viscosity with a low silver nanoparticle loading obtained by adjusting the amount of highly viscous organoammonium carbamate based compounds as one of the solvents in the ink;
2) Highly conductive features can be achieved after annealing. This is due to the fact that organoammonium carbamate based compound is heat-decomposable and it can evaporate during the process of annealing after the ink deposition on the surface of various substrates;
3) Organoamine stabilized silver nanoparticle inks containing certain amounts of organoammonium carbamate based compound are stable and suitable for low cost gravure printing applications.
4) Ink surface tension can be adjusted with different solvent mixtures to fit different substrate surface properties for electronic device applications.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims. Unless specifically recited in a claim, steps or components of claims should not be implied or imported from the specification or any other claims as to any particular order, number, position, size, shape, angle, color, or material.

## Claims

1. An ink composition comprising:
a metal nanoparticle;
a viscous heat decomposable liquid, wherein the viscous heat decomposable liquid imparts a desired viscosity to the ink composition and which evaporates at a sintering temperature of the metal nanoparticle;
an optional solvent;
wherein the ink composition has a metal content of less than about 25 percent by weight, based upon the total weight of the ink composition;
wherein the ink composition has a viscosity of from about 50 to about 200 centipoise at a temperature of about 20 to about 30 °C.

2. The ink composition of Claim 1, wherein the metal nanoparticle is selected from the group consisting of silver, cobalt, copper, nickel, gold, palladium, and combinations thereof.

3. The ink composition of Claim 1, wherein the metal nanoparticle is a silver nanoparticle.

4. The ink composition of Claim 1, wherein the metal nanoparticle is present in an amount of from about 10 to about 25 percent by weight, based upon the total weight of the ink composition.

5. A process for preparing an ink composition comprising:
combining a metal nanoparticle;
a viscous heat decomposable liquid, wherein the viscous heat decomposable liquid imparts a desired viscosity to the ink composition and which evaporates at a sintering temperature of the metal nanoparticle;
an optional solvent;
wherein the ink composition has a metal content of less than about 25 percent by weight, based upon the total weight of the ink composition;
wherein the ink composition has a viscosity of from about 50 to about 200 centipoise at a temperature of about 20 to about 30 °C.

6. The process of Claim 5, wherein the metal nanoparticle is a silver nanoparticle.

7. The process of Claim 5, wherein the viscous heat decomposable liquid is an organoammonium carbamate.

8. The process of Claim 5, wherein the optional solvent is present and is selected from the group consisting of an aromatic hydrocarbon solvent, an aliphatic hydrocarbon solvent, and combinations thereof.

9. A process comprising:
providing a composition comprising a metal nanoparticle; a viscous heat decomposable liquid, wherein the viscous heat decomposable liquid imparts a desired viscosity to the ink composition and which evaporates at a sintering temperature of the metal nanoparticle; an optional solvent; wherein the ink composition has a metal content of less than about 25 percent by weight, based upon the total weight of the ink composition; wherein the ink composition has a viscosity of from about 50 to about 200 centipoise at a temperature of about 20 to about 30 °C;
depositing the ink composition onto a substrate to form deposited features; and
optionally, heating the deposited features on the substrate to form conductive features on the substrate.

10. The process of Claim 9, wherein the process comprises a flexographic printing process or a gravure printing process.
